# EUROPEAN PATENT APPLICATION

(11) **EP 2 003 438 A2**
(43) Date of publication of application: **17.12.2008**
(21) Application number: 08158190.2
(22) Date of filing: 13.06.2008
(51) Int. Cl.: G01N 15/14

(54) **Apparatus for focusing a particle in sheath flow and method of manufacturing the same**

(30) Priority: 14.06.2007 KR 20070058572
(71) Applicant: Samsung Electronics Co., Ltd., Suwon-si, Gyeonggi-do 442-743 (KR)
(72) Inventor: Kim, Su-hyeon, Gyeonggi-do (KR); Huh, Nam, Gyeonggi-do (KR)
(74) Representative: Grünecker, Kinkeldey, Stockmair & Schwanhäusser Anwaltssozietät

(57) **Abstract**

An apparatus for focusing a particle in a sheath flow, the apparatus comprising: a sheath fluid inlet for injecting a sheath fluid; a first flow channel for conveying a fluid, wherein the first flow channel extends from the sheath fluid inlet to the fluid outlet and is formed such that a channel extending from the sheath fluid inlet is divided into two subchannels that extend further and are then merged into one channel; and a second flow channel that extends from the sample fluid inlet to the sample fluid outlet, wherein the second flow channel is in fluid communication with the first flow channel at the merged channel region through the sample fluid outlet so as to introduce a particle in a sample into a sheath fluid conveyed through the first flow channel.

## Description

### BACKGROUND OF THE INVENTION

### 1. Field of the Invention

The present invention relates to an apparatus for focusing a particle in a sheath flow and a method of manufacturing the same.

### 2. Description of the Related Art

Sheath flow is a particular type of laminar flow in which one layer of fluid, or a particle, is surrounded by another layer of fluid on more than one side. The process of confining a particle stream in a fluid is referred to as a 'sheath flow' configuration. For example, in sheath flow, a sheath fluid may envelop and pinch a sample fluid containing a number of particles. The flow of the sheath fluid containing particles suspended therein may be narrowed almost to the outer diameter of particles in the center of the sheath fluid. The resulting sheath flow flows in a laminar state within an orifice or channel so that the particles are lined and accurately pass through the orifice or channel in a single file row.

Sheath flow is used in many applications where it is preferable to protect particles or fluids by a layer of sheath fluid, for example, in applications where it is necessary to protect particles from air. For example, in particle sorting systems, flow cytometers and other systems for analyzing a sample, particles to be sorted or analyzed are usually supplied to a measurement position in a central fluid current, which is surrounded by a particle free liquid sheath.

Sheath flow is useful because particles can be positioned with respect to sensors or other components and particles in the center fluid, which is surrounded by the sheath fluid, can be prevented from touching the sides of the flow channel, thereby preventing clogging of the channel. Sheath flow allows for faster flow velocities and higher throughput of sample material. Faster flow velocity is possible without shredding cells in the center fluid because the sheath fluid protects the cells from shear forces at the walls of the flow channel.

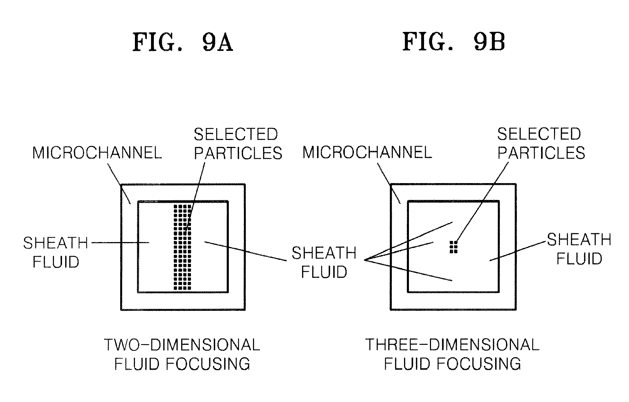

Conventional devices that have been employed to implement sheath flow have relatively complex designs and are relatively difficult to fabricate. For example, U.S. Patent No. 6,506,609 discloses a method of focusing and detecting particles flowing in a first microchannel, the method comprising: flowing the particles in a sample fluid in the first microchannel; focusing the particles in the first microchannel by introducing a fluid into the first microchannel from only one of one or more second microchannels such that the particles are directed towards a first side of at least opposing first and second sides of the first microchannel; directing an interrogating light beam into the focused sample fluid at a location on the first side of the first microchannel; and detecting the particles in the focused sample fluid using the interrogating light beam. In this case, since a two-dimensional channel structure is used, the manufacturing process is less complex. However, when a sample fluid is viewed from a section of the channel, its shape is long in the up and down directions. Therefore, it is difficult to uniformly control the flow velocity of particles (refer to FIG. 9A). In addition, the particles close to the up and down wall surfaces of the channel may hardly flow so that it is not preferable to use the two-dimensional channel structure. In addition, when being detected, the particles are positioned at different depths so that when a high magnification objective lens is used, it is difficult to position the particles within the focus of the lens.

In addition, U.S. Patent No. 6,830,729 discloses a sheath flow assembly including: a sample channel; a first sheath fluid channel positioned on either side of and converging with the sample channel; and upper and lower sheath fluid chambers positioned above and below and converging with the sample channel.

However, disadvantages still exist in that it remains difficult to manufacture and use a sheath flow device. In addition, focusing particles in a sample and detecting the focused particles remain difficult.

### BRIEF SUMMARY OF THE INVENTION

The present invention provides an apparatus and a method of manufacturing the apparatus for focusing a particle in a sheath flow, wherein the apparatus can be easily manufactured, has excellent focusing efficiency, and optionally easily detects the focused particle.

In particular, the present invention provides an apparatus for focusing a particle in a sheath flow, the apparatus comprising: a sheath fluid inlet for injecting a sheath fluid; a first flow channel for conveying a fluid, wherein the first flow channel extends from the sheath fluid inlet to the fluid outlet and is formed such that a channel extending from the sheath fluid inlet is divided into two subchannels that extend further and are then merged into one channel; and a second flow channel that extends from the sample fluid inlet to the sample fluid outlet, wherein the second flow channel is in fluid communication with the first flow channel at the merged channel region through the sample fluid outlet so as to introduce a particle in a sample into a sheath fluid conveyed through the first flow channel. The first flow channel may comprises a tapering region whose cross-sectional area decreases in a direction along which fluid flows therethrough at the merged channel region of first flow channel. The tapering region facilitates focusing of the sheath fluid around a particle. The apparatus of the present invention focuses the sheath fluid around a particle away from a side wall of surface of the first flow channel at a focusing region which is a merged channel region of the first flow channel extending downstream of the sample fluid outlet.

The apparatus for focusing a particle in a sheath flow, according to the present invention, may include at least two unit structures, each of the unit structures including the first flow channel, the second flow channel and the fluid outlet in separate, and the sheath fluid in common. That is, the apparatus for focusing a particle in a sheath flow may include one sheath fluid inlet and a plurality of unit structures each including the first flow channel, the second flow channel and the fluid outlet.

The apparatus for focusing a particle in a sheath flow may be manufactured by adhering an upper substrate, on which the sheath fluid inlet, the first flow channel, the second flow channel and the fluid outlet are partially or totally formed, to a lower substrate, which may be a flat substrate or a substrate of the corresponding portion of the sheath fluid inlet, the first flow channel, the second flow channel and/or the fluid outlet which are partially formed on the upper substrate.

In the upper substrate, a channel structure, an inlet or outlet of the apparatus for focusing a particle in a sheath flow may be inwardly engraved by injection molding, stamping, microfabrication, machining or sterolithography, but the present invention is not limited thereto. The upper substrate may be formed of a material selected from the group consisting of polydimethylsiloxane ("PDMS"), polycarbonate, polyethylene, polypropylene, polyacrylate, polystyrene and polytetrafluoroethylene ("PTFE"). In addition, the lower substrate may be made of a light transmissive material, for example, glass, cover glass or polydimethylsiloxane ("PDMS").

The first flow channel in the apparatus for focusing a particle in a sheath flow, according to the present invention, may further comprise an observation region extending from the end of the tapering region and having a constant cross-sectional area. A light detector may be disposed at an outer side of the first flow channel at an observation region, preferably on the lower substrate. The lower substrate may be a light transmissive and planar substrate, and thus the light detector can be disposed close to the sample and the sheath fluid which focuses the sample in the observation region of the first flow channel. Examples of the light detector may include an objective lens, a photodetector, a light source, and the like.

In the apparatus for focusing a particle in a sheath flow, according to the present invention, the first flow channel may be disposed such that a first direction of a sheath fluid flow from the sheath fluid inlet to a merging point of the two subchannels is different from the a second direction of sheath fluid flow from the merging point to the fluid outlet. The first direction may differ from the second direction from 160 ° to 200 °, from 170 ° to 190 °, from 175 ° to 185 °, substantially 180 °, or 180 °. Therefore, a merged channel region of the first flow channel consisting of a region from a merging point of the two subchannels to the fluid outlet of the first flow channel is preferably formed within an area between the two subchannels of the first flow channel from a diverging point to a merging point. In an example embodiment of the present apparatus, the first flow channel extends from a sheath fluid inlet and diverges into two subchannels at a diverging point, and then the two subchannels extend in parallel with each other and merge into one channel at a merging point. The merged channel extends from the merging point to the fluid outlet in a different direction from a direction of the first flow channel from the sheath fluid inlet to the merging point. As used herein, the term "direction" refers to a net direction of a sheath fluid flow which flows in the first flow channel from the start point to the end point of the sheath fluid flow. The direction of the first flow channel from the sheath fluid inlet to the merging point may differ from that of the first flow channel from the merging point to the fluid outlet from 160 ° to 200 °, from 170 ° to 190 °, from 175 ° to 185 °, substantially 180 °, or 180 °. Thus, the apparatus according to exemplary embodiments of the present invention can be positioned within a narrow area so that a plurality of apparatuses according to exemplary embodiments of the present invention can be disposed in a multiplex structure, such as in an array.

The cross-sectional area of the first flow channel or the two subchannels may be substantially constant throughout the length of the channel or may vary to facilitate focusing of the sample within the sheath fluid. It is preferable that the first flow channel has a tapering region in a direction along which fluid flows therethrough at a merged channel region, so that the cross-sectional area of the merged channel decreases in a direction along which fluid flows therethrough.

The sample outlet may or may not be formed at the center of the merged channel region. Preferably, the sample outlet may be formed at a position equidistant from each wall surface of the merged channel region in order to inject a sample fluid into the center core of a sheath fluid injected from the two subchannels to the merged channel region.

The apparatus of the present invention may or may not focus a sheath fluid around a particle at the center of a focusing region of the first flow channel. Preferably the apparatus focuses a sheath fluid around a particle on a portion equally distant from each wall surface of the first flow channel, that is, the center core of the first flow channel.

In addition, the sample fluid inlet may be connected to a sample reservoir through a pump. Examples of the pump may include a syringe pump, a high-performance liquid chromatography (HPLC) pump, a diaphragm pump, a peristaltic pump, an electric power pump, and the like, but are not limited thereto. In addition, the sample fluid can be introduced through a pump, and also introduced by applying a positive pressure to the sample fluid inlet or applying a negative pressure to a fluid outlet.

The present invention also provides a method of manufacturing the apparatus for focusing a particle in a sheath flow, the method including: inwardly engraving a surface of an upper substrate to form a sheath fluid inlet, and a first flow channel extending from the sheath fluid inlet to the fluid outlet, wherein the first flow channel is formed such that a channel extending from the sheath fluid inlet is divided into two subchannels that extend further and are then merged into one channel; adhering a light transmissive lower substrate on the engraved surface of the upper substrate to completely form the sheath fluid inlet, the first flow channel and the fluid outlet; and forming a second flow channel at the merged region of the first flow channel, wherein the second flow channel extends from a sample fluid inlet to a sample fluid outlet and is in fluid communication with the first flow channel at the merged channel region through the sample fluid outlet.

The engraving may be performed by injection molding, stamping, microfabrication, machining, or sterolithography, but is not limited thereto. The upper substrate may be formed of a material selected from the group consisting of polydimethylsiloxane ("PDMS"), polycarbonate, polyethylene, polypropylene, polyacrylate, polystyrene and polytetrafluoroethylene ("PTFE").

The lower substrate may be a light transmissive substrate, for example, glass, cover glass, or a polydimethylsiloxane ("PDMS") substrate.

In the engraving of the present method, the first flow channel may comprise a tapering region at the merged channel region whose cross-sectional area decreases in a direction along which fluid flows therethrough. The first flow channel may further comprise an observation region extending downstream from the end of the tapering region and having a constant cross-sectional area.

In the engraving of the present method, the first flow channel may be disposed such that a first direction of a sheath fluid flow from the sheath fluid inlet to a merging point of the two subchannels is different from the a second direction of sheath fluid flow from the merging point to the fluid outlet. The first direction may differ from the second direction from 160 ° to 200 °, from 170 ° to 190 °, from 175 ° to 185 °, substantially 180 °, or 180 °. Therefore, a merged channel region of the first flow channel consisting of a region from a merging point of the two subchannels to the fluid outlet of the first flow channel is preferably formed within an area between the two subchannels of the first flow channel from a diverging region to a merging region.

In the adhering of the present method, the engraved upper substrate and the lower substrate may be attached by using an adhesive material known in the art, or the two substrates may be attached to each other via the adhesive properties of the substrates. For example, the polydimethylsiloxane ("PDMS") has an adhesive property and can be attached to a substrate such as glass or cover glass by compressing the substrates against each other. As a result, an adhered structure comprising the first flow channel is formed.

In the forming of the present method, a second flow channel is formed at the merged region of the first flow channel, wherein the second flow channel extends from a sample fluid inlet to a sample fluid outlet and is in fluid communication with the first flow channel at the merged channel region through the sample fluid outlet. The second flow channel may be easily formed at the merged region of the first flow channel by simply making a hole and inserting a tube into the merged channel region of the first flow channel.

### BRIEF DESCRIPTION OF THE DRAWINGS

The above and other aspects, features, and advantages of the present invention will become more apparent by describing in further detail exemplary embodiments thereof with reference to the attached drawings in which:
FIG. 1 is a perspective view illustrating an apparatus for focusing a particle in a sheath flow, according to an exemplary embodiment of the present invention;
FIG. 2 is an enlarged partial side view illustrating a merged channel region of the first flow channel including a focusing region, and an observation region of the apparatus for focusing a particle in a sheath flow of FIG. 1;
FIG. 3 is a plan view illustrating an apparatus for focusing a particle in a sheath flow, according to an exemplary embodiment of the present invention;
FIG. 4 is a plan view illustrating an apparatus for focusing a particle in a sheath flow, according to an exemplary embodiment of the present invention, wherein the apparatus includes 4 unit structures each including a single fluid inlet, a first flow channel, a second flow channel and a fluid outlet;
FIGS. 5A-5F are perspective views illustrating a method of manufacturing an apparatus for focusing a particle in a sheath flow, according to an exemplary embodiment of the present invention;
FIGS. 6A-6D are CCD camera images illustrating results of an experiment when a sample fluid is introduced into a sheath fluid in a merged channel region through a second flow channel;
FIG. 7 is a schematic diagram illustrating the configuration of an apparatus for focusing a particle in a sheath flow used in the experiment of FIG. 6;
FIGS. 8A-8D are pictures showing results when a latex bead sample fluid is introduced into the sheath fluid in the merged channel region through a second flow channel, while a sheath fluid flows through a first flow channel; and
FIGS. 9A and 9B are schematic views showing particles in a sample, wherein the particles are two-dimensionally and three-dimensionally focused, respectively.

### DETAILED DESCRIPTION OF THE INVENTION

The present invention will now be described more fully with reference to the accompanying drawings, in which exemplary embodiments of the invention are shown.

It will be understood that when an element is referred to as being "on" another element, it can be directly on the other element or intervening elements may be present therebetween. In contrast, when an element is referred to as being "disposed on" or "formed on" another element, the elements are understood to be in at least partial contact with each other, unless otherwise specified.

The terminology used herein is for the purpose of describing particular embodiments only and is not intended to limit the invention. As used herein, the singular forms "a", "an" and "the" are intended to include the plural forms as well, unless the context clearly indicates otherwise. The use of the terms "first", "second", and the like do not imply any particular order but are included to identify individual elements. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.
Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. In the drawings, like reference numerals in the drawings denote like elements.

The term "microfluidic device" as used herein refers to a system or an apparatus for handling, processing, ejecting and/or analyzing a fluid sample, the device including at least one channel of microscale dimensions.

The terms "channel" and "flow channel" as used herein refer to a pathway formed in or through a medium that allows the movement of fluids, such as liquids and gases. A "microchannel" refers to a channel in the microfluidic device, the microchannel preferably having cross-sectional dimensions in the range of about 1.0-500 µm, more preferably of about 25-250 µm, and most preferably of about 50-150 µm. Those of ordinary skill in the art will be able to determine the appropriate volume and length of the flow channel. The flow channel may have various configurations, such as a linear or non-linear configuration and a U-shaped configuration.

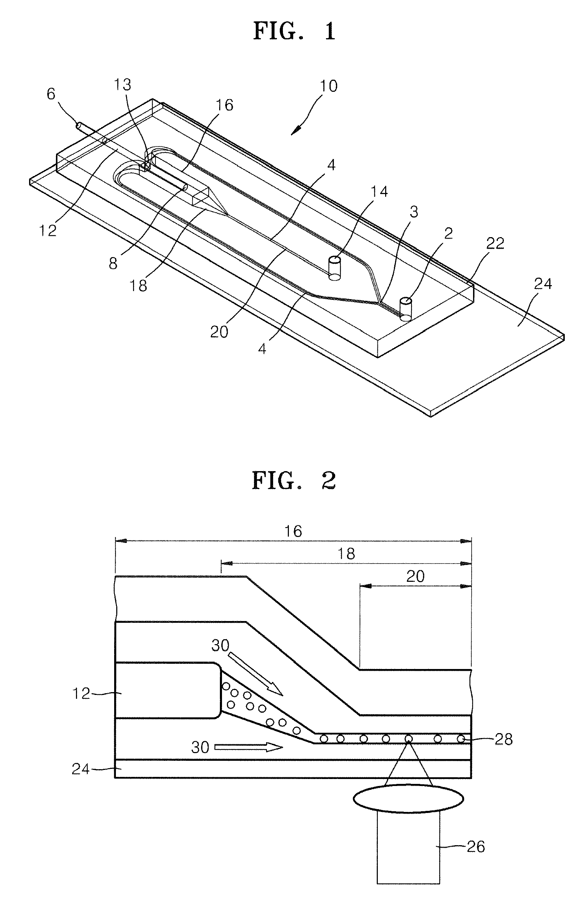

FIG. 1 illustrates an apparatus 10 for focusing a particle in a sheath flow, according to an exemplary embodiment of the present invention. The apparatus 10 includes a sheath fluid inlet 2; a first flow channel 4 to transmit fluid, wherein the first flow channel 4 extends from the sheath fluid inlet 2; a sample fluid inlet 6 and a second flow channel 12 that extends from the sample fluid inlet 6 and has a sample outlet 8 at an end portion of the second flow channel 12 to be in fluid communication with the first flow channel 4, wherein the second flow channel 12 is formed to inject a particle into a sheath fluid transmitted through the first flow channel 4; and a fluid outlet 14 disposed at the end portion of the first flow channel 4, wherein the fluid outlet 14 ejects fluid injected from the sheath fluid inlet 2 and the sample fluid outlet 8. The first flow channel 4 is formed such that a single channel extending from the sheath fluid inlet 2 is divided into two subchannels at a diverging point that extend further and are then merged into one channel at a merging point, and the merged channel extends from the merging point to the fluid outlet 14. The direction of the first flow channel from the sheath fluid inlet to the merging point is substantially opposite from that of the first flow channel from the merging point to the fluid outlet 14, however, the direction is not limited thereto. The direction of the first flow channel from the sheath fluid inlet to the merging point may be different from that of the first flow channel from the merging point to the fluid outlet 14. Preferably, the difference in the direction may be from 160 ° to 200 °, from 170 ° to 190 °, from 175 ° to 185°, or 180°. The merged channel region 16 of the first flow channel consisting of a region from a merging point 13 of the two subchannels to the fluid outlet 14 of the first flow channel is formed within an area between the two subchannels of the first flow channel from a diverging point 3 to a merging point 13. The merged channel region 16 of the first flow channel includes a focusing region 18 extending downstream of the sample fluid outlet 8 and comprising a tapering region, thereby a cross-sectional area thereof decreases in a direction along which fluid flows therethrough. The tapering of the channel facilitates focusing of the sheath fluid around a particle. The focusing region 18 of the first flow channel may further include a region, i.e., an observation region 20 having a substantially constant cross-sectional area and at least a part of the substrate defining the observation region 20 includes a light transmissive material. Thus, a light detector may disposed on the outer side of the observation region 20 to detect a particle focused in a sheath flow.

Referring to FIG. 1, the apparatus 10 can be manufactured by inwardly engraving an upper substrate 22 to form totally or partially the sheath fluid inlet 2, the first flow channel 4, and the fluid outlet 14. Then the upper substrate 22 is adhered to a lower substrate 24, which is flat. However, the lower substrate 24 can have other configurations. Finally, , the second flow channel 12 may be formed by inserting a tube into the merged channel region of the first channel.

FIG. 2 is an enlarged partial side view illustrating the merged channel region 16 of the first flow channel 4 of the apparatus 10. Referring to FIG. 2, a sample fluid 28 is introduced into a sheath fluid 30 through the second flow channel 12 in the merged channel region 16, the sample fluid 28 is focused in a sheath fluid flow 30 in the focusing region 18, and then particles in the sample fluid 28 are detected by a light detector 26 in the observation region 20. The light detector 26 may include a light source for transmitting light to the particles, a lens for condensing the light to interact with the particles, a photodiode for detecting the condensed light, an optical device such as a photomultiplier tube ("PMT") or the like, a light imaging device such as a charged coupled device ("CCD"), a complementary metal-oxide semiconductor ("CMOS") or the like, for example, but is not limited thereto.

Still referring to FIG. 2, the second flow channel 12 is disposed at a position equally distant from each wall surface of the merged channel region 16, that is, substantially at the center of the merged channel region 16, and is in fluid communication with the merged channel region 16 through the sample outlet 8. However, the position of the second flow channel 12, including sample outlet 8, may be any position from the each wall surface of the merged channel region 16. A sample fluid 28 introduced into the merged channel region 16 can be three-dimensionally focused by a sheath fluid 30 in the focusing region 18. The flat substrate 24 is light transmissive, and the light detector 26 may be positioned outside of the flat substrate 24 to be close to a sample. The focusing region 18 includes a region of which cross-sectional area decreases according to a fluid flowing direction, as indicated by the pair of arrows in FIG. 2.

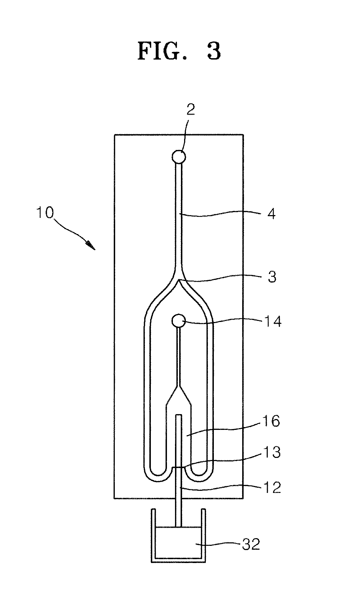

FIG. 3 is a plan view illustrating an apparatus 10 for focusing a particle in a sheath flow, according to another exemplary embodiment of the present invention.

Referring to FIG. 3, a second flow channel 12 may be connected to a sample reservoir 32. The sample may be introduced into a merged channel region 16 of a first flow channel 4 by a pump (not shown), by applying a positive pressure to the sample reservoir 32, or applying a negative pressure to a fluid outlet 14.

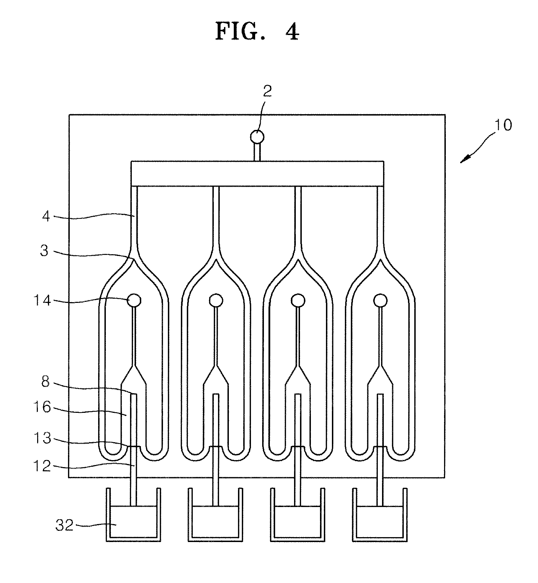

FIG. 4 is a plan view illustrating an apparatus 10 for focusing a particle in a sheath flow, according to yet another exemplary embodiment of the present invention, wherein the apparatus 10 includes 4 unit structures. Each of the unit structures includes a single fluid inlet 2 in common, a first flow channel 4, a second flow channel 12 and a fluid outlet 14. Referring to FIG. 4, a direction in which a sheath fluid flows through two subchannels of the first flow channel 4 is opposite to a direction in which a sample fluid flows through the second flow channel 12, a merged channel region 16 of the first flow channel 4, and the fluid outlet 14. Thus, a plurality of the unit structures can be formed in a narrow area. Accordingly, the apparatus 10 according to the present exemplary embodiment is useful as an analyzer.

Particles contained in a sample fluid used in the present invention may be a virus, bacteria, cells, microbeads, nanorods, or single fluorescent molecules, for example, but are not limited thereto.

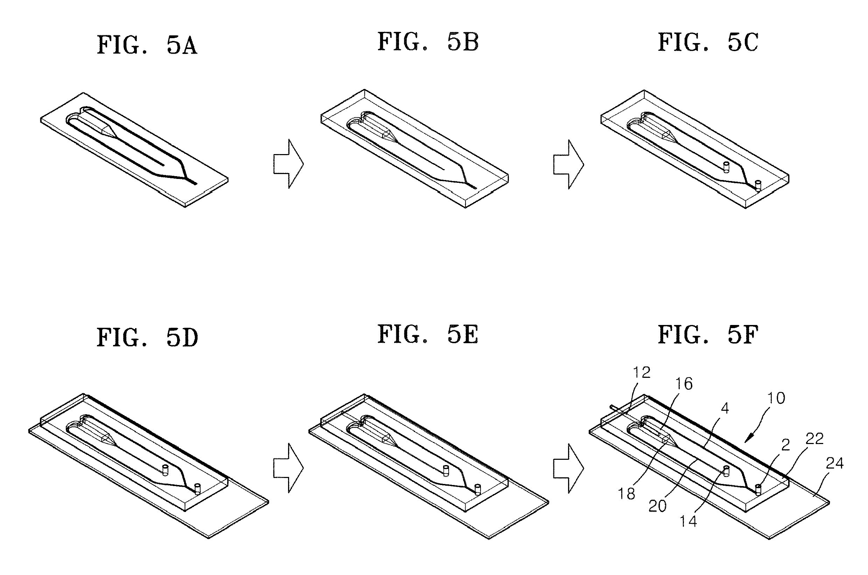

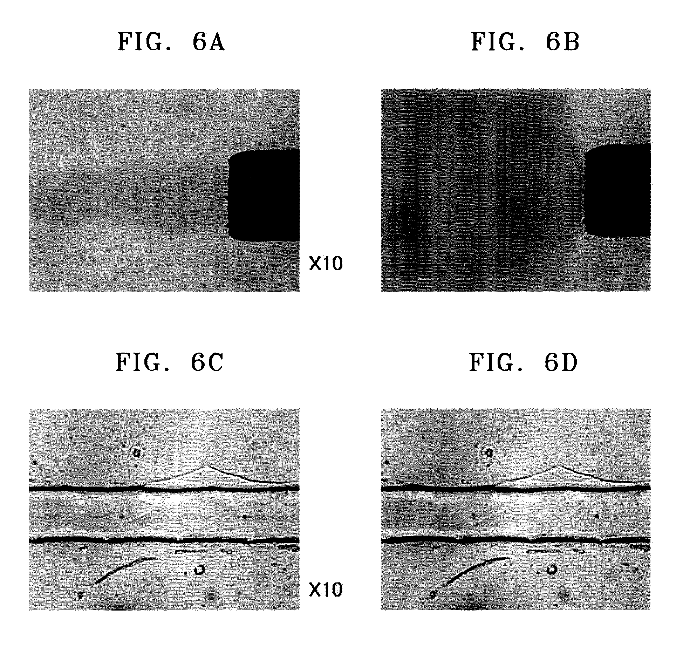

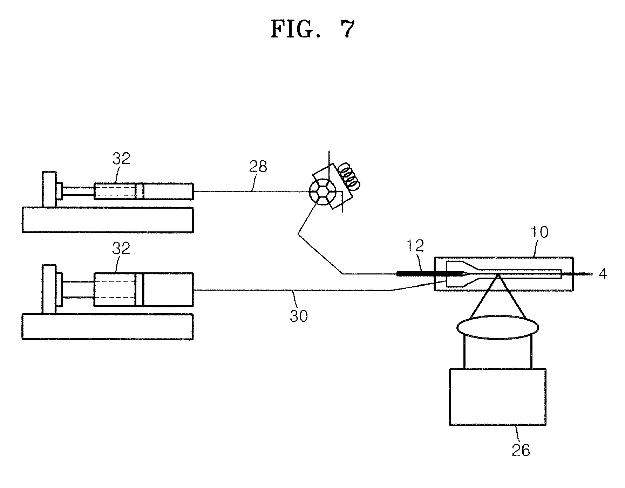

FIGS. 5A-5F are perspective views illustrating a method of manufacturing an apparatus for focusing a particle in a sheath flow, according to another exemplary embodiment of the present invention. In a first operation as illustrated in FIG. 5A, an elastomer hardened by mixing two components in a liquid state, (e.g., XE15-C2415 and GE Toshiba silicone), is poured into a mold. The mold may be made by machining. Then, in a second operation as illustrated in FIG. 5B, air bubbles are removed by placing the mold in a vacuum atmosphere, and the resultant is kept for several hours in an oven at 70°C and hardened. In a third operation as illustrated in FIG. 5C, a substrate on which a flow channel is inwardly engraved is taken out of the mold, and then perforated using a punch to form a sheath fluid inlet and outlet. Next, in a fourth operation as illustrated in FIG. 5D, a surface of the substrate on which a flow channel is inwardly engraved and a surface of cover glass are corona-discharge treated to activate the surfaces, and then adhered to each other. Next, in fifth and sixth operations, as illustrated in FIGS. 5E and 5F, a merged channel region of the first flow channel is perforated using a needle, and a 26G stainless steel tube is inserted into the chamber region to form a second flow channel connected with the merged channel region of the first flow channel so that the first flow channel and the second flow channel are in fluid communication with each other. According to FIGS. 5A-5F, the second flow channel is formed after the first flow channel has been formed. FIGS. 6A-6D are images illustrating results of an experiment when a sample fluid is introduced into a sheath fluid in a merged channel region through a second flow channel. The results presented in FIGS. 6A-6D were obtained with the apparatus of FIG. 3 and FIG. 7, when a sheath fluid 30, that is, 100 mM sodium borate buffer at pH 9.5, was injected with a flow velocity of 160 µl/min through the first flow channel using a syringe pump 32, and a sample fluid 28, that is, a 10 mM phenol red solution dissolved in a 100 mM sodium borate buffer at pH 9.5, was introduced into the sheath fluid 30 in the merged channel region at a flow velocity of 8 µl/min through the second flow channel 12 using the syringe pump 32. FIGS. 6A and 6C are images of a focusing region including tapering region (FIG. 6A) and an observation region (FIG. 6C), respectively, taken by a CCD camera 26 when the sheath fluid 30 flowed. FIGS. 6B and 6D are images of a focusing region including tapering region (FIG. 6B) and an observation region (FIG. 6D), respectively, taken by the CCD camera 26 when the sheath fluid 30 did not flow. In FIGS. 6A and 6C, it can be seen that phenol red colors are focused on the center of the first flow channel in a straight line. On the other hand, in FIGS. 6B and 6D, it can be seen that phenol red colors are dispersed.

FIG. 7 is a schematic diagram illustrating the configuration of an apparatus for focusing a particle in a sheath flow used in the experiment of FIG. 6.

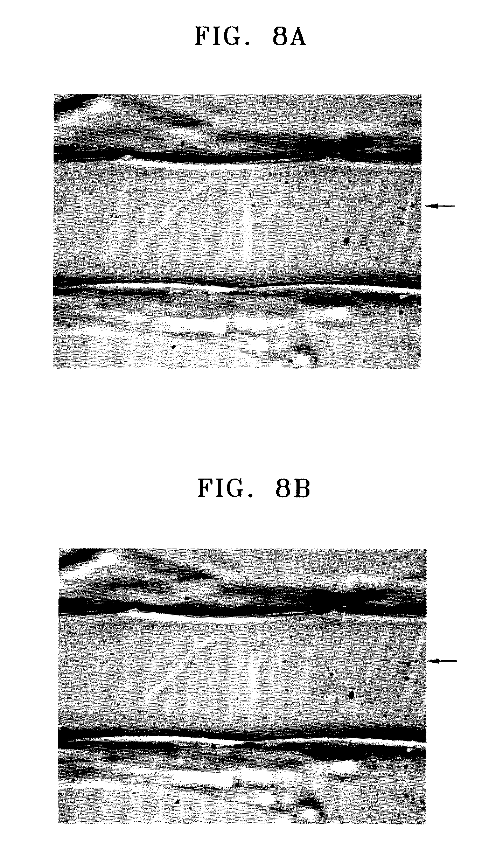

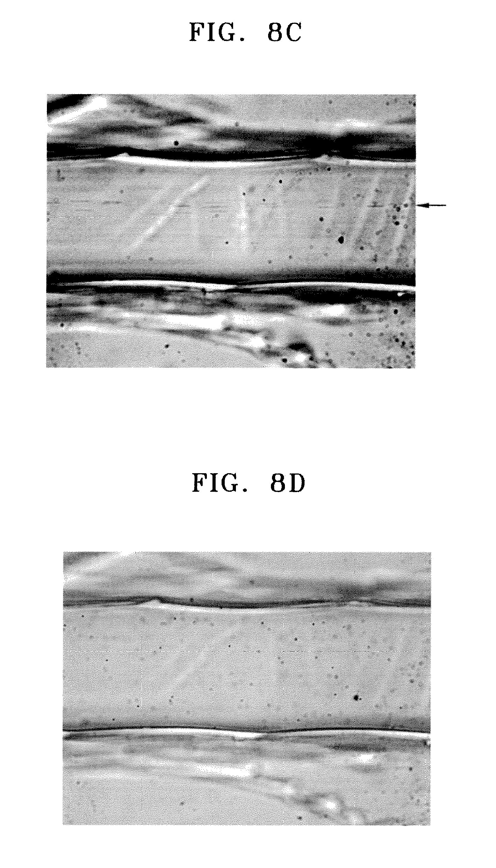

FIGS. 8A-8D are images illustrating results when a latex bead sample fluid was introduced into a sheath fluid in a merged channel region through a second flow channel when the sheath fluid flows through a first flow channel. The results presented in FIGS. 8A-8D were obtained using the apparatus illustrated in FIG. 3 or FIG. 7 when a sheath fluid 30, e.g., distilled water, was injected at a flow velocity of 160 µl/min through a first flow channel using a syringe pump 32, and a sample fluid 28, that is, a latex bead solution having a particle diameter of 1 µm, obtained by diluting a 2% FluoroSphere® carboxylate-modified microsphere (Invitrogen) solution to 1 /10 using distilled water, was introduced into the sheath fluid 30 in a merged channel region at a flow velocity of 8 µl/min through a second flow channel 12 using the syringe pump 32. In FIGS. 8A, 8B and 8C, the CCD camera shutter speeds were 10µs, 20µs and 40µs, respectively. FIG. 8D is an image showing an observation region when a sheath fluid did not flow.

In FIGS. 8A, 8B and 8C, black spots in a straight line are confirmed, thus it can be seen that particles are focused on a certain portion of a channel. However, in FIG. 8D, dispersed particles are observed, thus it can be seen that the particles are not focused. In addition, since beads move continuously, spots are not seen unless a time of obtaining images from the CCD camera is very short, and as a shutter time gets longer, a long trace of the spots is observed. The length of the trace is related to the moving velocity of beads. Herein, the length of the trace is observed to be nearly constant, thus it can be seen that the velocity of particles is maintained constant.

FIGS. 9A and 9B are schematic views illustrating a shape in which particles in a sample are two-dimensionally and three-dimensionally focused. According to the apparatus of the present invention, as illustrated in FIG. 9B, particles in a sample can be easily focused in the center of a channel, and also since a flat substrate such as cover glass may be used, a light detector can be disposed close to the focused particles so that the particles can be easily detected.

The apparatus of the present invention has a simple structure, and is thus inexpensive. A light detector is disposed close to a sample fluid so that particles in a sample can be detected with high detection intensity. In addition, a plurality of the apparatuses can be positioned within a small area, and the formation of multiplex arrays including the apparatus of the present invention is possible. In addition, since the apparatus of the present invention includes a single sheath fluid inlet, it is easy to control the fluid flow.

According to the exemplary method of the present invention described above, the apparatus according to the present invention can be efficiently manufactured.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An apparatus (10) for focusing a particle in a sheath flow, the apparatus comprising:
a sheath fluid inlet (2) for injecting a sheath fluid (30);
a first flow channel (4), wherein the first flow channel (4) extends from the sheath fluid inlet (2) to a fluid outlet (14) and is formed such that a channel extending from the sheath fluid inlet (2) is divided into two subchannels that extend further and then merge into one channel; and
a second flow channel (12) that extends from the sample fluid inlet (6) to the sample fluid outlet (8), wherein the second flow channel (12) is in fluid communication with the first flow channel (4) at a merged channel region (16) through the sample fluid outlet (8) so as to introduce a particle in a sample (28) into the sheath fluid (30) conveyed through the first flow channel (4).

2. The apparatus of claim 1, wherein a first direction, which is a direction of the first flow channel (4) from the sheath fluid inlet (2) to a merging point (13), differs from a second direction, which is a direction of the first flow channel (4) from the merging point (13) to the fluid outlet (14), by from 170° to 190°, preferably wherein the first direction is substantially opposite to the second direction.

3. The apparatus of claim 1 or 2, wherein the merged channel region (16) of the first flow channel (4) consisting of a region from a merging point (13) of the two subchannels to the fluid outlet (14) of the first flow channel (4) is formed within an area between the two subchannels of the first flow channel from a diverging region to a merging region.

4. The apparatus of one of claims 1 to 3, the apparatus comprising at least two unit structures, each of the unit structures comprising the first flow channel (4), the second flow channel (12) and the fluid outlet (14), in separate and the sheath fluid inlet (2) in common.

5. The apparatus of one of claims 1 to 4, wherein the apparatus comprises an upper substrate (22) and a lower substrate (24) attached to the upper substrate, wherein the sheath fluid inlet, the first flow channel, the second flow channel, and the fluid outlet are partially or totally formed in the upper substrate.

6. The apparatus of one of claims 1 to 5, wherein the first flow channel comprises a tapering region whose cross-sectional area decreases in a direction along which fluid flows therethrough.

7. The apparatus of claim 6, wherein the first flow channel further comprises an observation region (20) extending from the end of tapering region and having substantially a constant cross-sectional area.

8. The apparatus of claim 7, wherein a light detector (26) is disposed at an outer side of the first flow channel at the observation region.

9. The apparatus of one of claims 1 to 8, wherein the sample fluid outlet is formed at a position equally distant from each wall surface of the merged channel region of the first flow channel in order to inject a sample fluid into the center of a sheath fluid injected from the two subchannels region to the merged channel region.

10. The apparatus of one of claims 1 to 9, wherein a sheath fluid is focused around the particle on a portion equally distant from each wall surface of the first flow channel at a focusing region (18) of the merged channel region (16) of the first flow channel extending downstream of the sample fluid outlet.

11. The apparatus of one of claims 1 to 10, wherein the sample fluid inlet is connected to a sample reservoir (32) through a pump.

12. The apparatus of claim 6 or one of claims 7 to 11 in combination with claim 6, wherein the lower substrate is a light transmissive substrate, preferably wherein the lower substrate is glass, cover glass, or a polydimethylsiloxane substrate.

13. A method of manufacturing an apparatus (10) for focusing a particle in a sheath flow, the method comprising:
inwardly engraving an upper substrate (22) to form a sheath fluid inlet (2), and a first flow channel (4) extending from the sheath fluid inlet to a fluid outlet (14), wherein the first flow channel (4) is formed such that a channel extending from the sheath fluid inlet (2) is divided into two subchannels that extend further and are then merged into one channel;
adhering a light transmissive lower substrate (24) to the engraved surface of the upper substrate (22) to completely form the sheath fluid inlet (2), the first flow channel (4) and the fluid outlet (14); and
forming a second flow channel (12) at a merged channel region (16) of the first flow channel, wherein the second flow channel extends from a sample fluid inlet (6) to a sample fluid outlet (8) and is in fluid communication with the first flow channel (4) at the merged channel region (16) through the sample fluid outlet (8).

14. The method of claim 13, wherein the engraving is performed by injection molding, stamping, microfabrication, machining, or sterolithography.

15. The method of claim 13 or 14, further comprising forming at least two unit structures, each of the unit structures comprising the first flow channel, the second flow channel, and the fluid outlet in separate, and the sheath fluid inlet in common.

16. The method of one of claims 13 to 15, wherein a first direction, which is a direction of the first flow channel (4) from the sheath fluid inlet (2) to a merging point (13), differs from a second direction, which is a direction of the first flow channel (4) from the merging point (13) to the fluid outlet (14) by from 170° to 190°, preferably wherein the first direction is substantially opposite to the second direction.
